# EUROPEAN PATENT SPECIFICATION

(11) **EP 3 787 830 B1**
(45) Date of publication and mention of the grant of the patent: **25.01.2023**
(21) Application number: 19719322.0
(22) Date of filing: 26.04.2019
(51) Int. Cl.: B23K 11/00, B23K 11/02, B23K 11/30, B23K 101/32, B23K 103/04

(54) **WELDING APPARATUS FOR BUTT WELDING STEEL CORD USING ELECTRODES WITH ONE OR MORE ELONGATED FLAT AREAS AND METHOD OF WELDING STEEL CORD ENDS TO ONE ANOTHER USING SUCH APPARATUS**
VORRICHTUNG ZUM STUMPFSCHWEISSEN VON STAHLSEILEN UMFASSEND ELEKTRODEN MIT EINER ODER MEHREREN LANGLICHEN FLACHEN ZONEN UND VERFAHREN ZUM SCHWEISSEN VON STAHLSEILENENDEN UNTER VERWENDUNG EINER SOLCHEN VORRICHTUNG
DISPOSITIF DE SOUDAGE BOUT À BOUT DE CORDAGES EN ACIER AVEC DES ÉLECTRODES AYANT UNE OU PLUSIEURS ZONES PLATES ALLONGÉES ET MÉTHODE DE SOUDAGE D'EXTRÉMITÉS DE CORDAGES EN ACIER UTILISANT UN TEL DISPOSITIF DE SOUDAGE

(30) Priority: 04.05.2018 EP 18170758
(43) Date of publication of application: 10.03.2021
(73) Proprietor: NV Bekaert SA, 8550 Zwevegem (BE)
(72) Inventor: CUYPERS, Martin, 8780 Oostrozebeke (BE)
(74) Representative: Seynhaeve, Geert Filiep
(86) International application number: PCT/EP2019/060767
(87) International publication number: WO 2019/211198

(56) References cited:
- JP-A- H08 132 246
- JP-A- 2013 163 210
- US-A- 3 037 108
- US-A- 4 400 608
- US-A1- 2014 263 198

## Description

### Technical Field

The invention relates to the welding electrodes of a welding apparatus and the welding apparatus comprising such welds. More in particular the invention relates to a welding apparatus for butt welding steel cord ends and to a method of welding steel cord ends to one another, see claims 1 and 10.

### Background Art

Steel cord is used as reinforcement of rubber articles such as tires, hoses, belts, etc... A steel cord comprises a plurality of steel filaments twisted together into a strand. Steel cords are very different from steel wire ropes
- as they are known for hoisting lifts, cranes etc... - in many different aspects:
   - The steel filaments have a high tensile strength e.g. more than 2500 N/mm² or higher than 3000 N/mm² or even above 3500 N/mm². The high tensile strength is obtained by cold deformation of a high carbon steel wire in a wire drawing process;
   - The filaments are very thin such as thinner than 0.30 mm, or less than 0.25 mm or even below 0.20 mm but in general thicker than 0.10 mm;
   - The number of filaments in a steel cord may vary between 2 and 150 but most of the steel cords comprise between 2 and 27, or even between 2 and 12 filaments;
   - The way in which the steel filaments are grouped together is very different from that of steel wire ropes. In many cases a steel cord will not show a nicely round cross section as a strand in a wire rope but will rather exhibit an irregular and/or loose appearance. This is due to the requirement that rubber must be able to penetrate into a steel cord in order to seal the steel from possible moisture ingress during the use of the rubber article e.g. a tire. Moisture ingress can lead to corrosion of the steel.

During the handling of the steel cord methods are needed to connect steel cord ends to one another in order to ensure the continued processing of the cord. The most common method is that steel cord ends are connected by resistance welding, sometimes also called 'upset welding' or 'resistance butt welding'. In this procedure two steel cord ends are cut flush and aligned end to end in the clamps of an electrical welder. The clamps can move to one another in a direction perpendicular the plane of the clamps. First the steel cord ends are made to contact and an electrical current (AC or DC) is driven through the contact by the clamps. The steel will start to soften and melt. While the steel is soft the clamps are pressed to one another and a weld blob forms. After the weld is formed the current is cut off and the weld is allowed to cool down. Possibly the welding is followed by an annealing step. In order to eliminate the diameter increase at the weld it may be necessary to remove the weld burr by means of grinding or filing or hammering.

As the steel cord comprises very fine and flexible filaments that are twisted together in a loose and/or irregular way the welding of steel cord is more challenging than of a steel wire rope that is regularly and tightly twisted. Also a rod or thick single filament (e.g. with a diameter of larger than half a millimetre) is much simpler to weld as a good electrical contact can be made repeatedly. Indeed when mounting the steel cord ends between clamps, the filaments tend to glide over one another and rearrange in the clamps. This results in a less than desired electrical contact and a varying contact resistance from weld to weld.

WO 2015/144427 describes a preferred method and apparatus to execute steel cord welds. The problem of varying contact resistance in the clamps is solved by a DC current that is controlled. Although the electrodes - that make electrical and thermal contact with the steel cord ends - are an important part of the welding apparatus, this application is silent on the type of weld electrodes used.

Another butt welding machine capable of welding steel cord ends and heat treatment of the weld is disclosed in KR101434335. However, no specific details are given on the shape of the electrodes.

US 2014/0263198 (disclosing all the features of the preamble of claims 1 and 10) describes a wire butt welder of which the alignment of the wire rod ends that are to be welded can be varied. Although different possible electrodes are discussed, these electrodes are particularly suited for use for welding solid metal rods and not steel cords.

As none of the above solutions focus on an optimal contact between the steel cord and the electrode, the inventor has therefore come up with a solution that improves the electrical contact and results in more repeatable welds.

### Disclosure of Invention

The primary object of the invention is to improve the repeatability of the electrical contact between the steel cord ends in a welding apparatus. A further object of the invention is to provide an electrode of which the surface makes a good electrical contact with a steel cord. Another object of the invention is to provide a welding apparatus wherein the electrode is mounted.

Within this application whenever 'or' is used, it is to be interpreted as an 'exclusive or' i.e. 'A or B' is either 'A' or 'B', but not 'A and B'. Whenever all combinations are meant this will be explicitly referred to as 'A' or 'B' or `A and B' or, equivalently, 'A and/or B'.

According to a first aspect of the invention a welding apparatus for butt welding steel cord ends by means of resistance welding is defined in claim 1. Apart from the necessary and obvious parts of a resistance welder such as a current supply that can be a DC or AC current supply delivering sufficient current to make a weld the welding apparatus comprises at least two clamps. One clamp comprises two jaws that can close and hold one steel cord end. The plane in which the jaws of the clamp close or open - usually around a pivot point - defines, according to the present invention, 'the plane of the clamp'.

Two clamps is the absolute minimum to be able to make a weld. More clamps - for example three or four clamps - are preferred in case one also intends to anneal the weld 'in situ'. Therewith is meant: when the weld has been made one (in case of three clamps in total) or two (in case of four clamps in total) of the clamps used for welding are opened and the other clamps are used for annealing.

As in a known steel cord welder the two or more clamps can move relative to one another on a common axis perpendicular to the plane of the clamp. This movement is needed in order to press the steel cord ends against each other to make electrical contact and to consolidate the steel material once it starts to soften and melt.

Also as in a known steel cord welder each one of the clamps has a pair of electrodes that are mounted on the jaws of the clamp: one electrode on each clamp jaw. One member of the pair of electrodes has a first surface, the other member of the pair has a second surface. The first surface faces the second surface i.e. they are oriented towards one another. 'First' and 'second' do not imply any particular orientation or order in the electrodes: it is just to discriminate between the members of the pair of electrodes.

When the pair of electrodes is mounted in the clamp a cord direction can be defined on the first surface and second surface that is parallel to the movement direction of the clamps and perpendicular to the plane of the clamps. The steel cord ends are clamped between the first and second surface of an electrode pair of a clamp in the cord direction. In order to obtain sufficient clamping of the steel cord ends, it is best that the first and second surface of an electrode pair do not abut against one another when a steel cord end is present in between the two surfaces. The steel cord end must be squeezed between the first and second surface. If the first and second surface would touch each other during clamping, the steel cord end can be pulled out easily as it is not held between the electrode surfaces. The clamps with their associated pair of electrodes are aligned such that the steel cord ends are along the same line according the cord direction.

Particular about the electrodes of the clamps is that when the first surface is pressed against the second surface without steel cord ends in between, the first and second surface contact one another in two or more elongated flat areas perpendicularly oriented to the cord direction.

The 'two or more elongated flat areas' can easily be determined by pressing a carbon paper-paper pair between the first and second surface without steel cord ends in between. Alternatively pressure sensitive paper can be held between the first and second surface while pressing them against one another. The resulting imprint will show where the first and second surface contact each other. The marked areas within that imprint define where the flat areas are located. By preference the flat areas are convex i.e. any line connecting two bordering points of one single flat area must be completely inside that single flat area.

According to the present invention, the first surface of an electrode pair comprises one, two or more elongated flats and the second surface of an electrode pair comprises one, two or more elongated flats, wherein the flats of the first and second surface are oriented perpendicular to one another and - upon closing without a steel cord end being present - contact one another in two or more elongated flat areas oriented perpendicular to the cord direction. For clarity: 'flat' or 'flats' refers to the parts, sections, regions of surface of one electrode, 'flat areas' refers to the contact area of the electrodes upon closing.

The flat areas are, according to the present invention, elongated. By this is meant that when delimiting one area between a pair of parallel lines touching the area, an orientation exists where the distance between the parallel lines is minimal. The perpendicular distance between the parallel lines in that orientation is called the 'width W', the direction perpendicular to the parallel lines the 'width direction'. The 'length L' of the elongated area then corresponds to the perpendicular distance between parallel lines oriented parallel to the width direction and touching the one area. The 'length direction' is perpendicular to the width direction. The area is elongated when the length is strictly larger than the width: L>W. The orientation of the elongated flat area is with reference to its length direction.

Each one of the two or more elongated flat areas is, according to the present invention, perpendicularly oriented to the cord direction. With that is meant that the length direction of the elongated flat areas is substantially perpendicular or perpendicular to the cord direction. In this context 'perpendicular' means that there is an angle between the length direction and the cord direction of between 80° and 100°, or even between 85° and 95°.

In a first preferred embodiment the number of elongated flat areas is two, three, four, five or six. When only one elongated flat area is present all clamping force is exerted by that one elongated flat area on the steel cord and there is risk of local damage of the wire. Also the contact area for conveying electrical current to the steel cord end becomes too limited and a too high local current density is reached with the risk of spark formation. In addition the limited contact area does not allow to remove heat efficiently from the weld.

When more than six contact areas are present, the local pressure exerted by each of the flats on the steel cord end becomes limited. In addition the flats become too close to one another and in between the flat areas there is no further contact between surface and steel cord.

When the electrodes are closed without steel cords, the total area of the two or more elongated flat areas is larger than or equal to 1% and smaller than or equal to 30% of the total area of the first and second surface. With the `area of the first (alternatively second) surface' is meant the area of the electrode surface facing the second (alternatively first) surface including any recesses, or grooves or other areas not forming part of the elongated flat areas.

When the total area of the two or more elongated flat areas is lower than 1% there is the risk of a too high local current distribution at this area. When the total area of the two or more elongated flat areas is larger than 30% of the total area of first and second surface, the problems of the prior art re-emerge in that due to the re-arrangement of filaments a varying contact resistance from weld to weld clamping occurs.

Other preferred ranges for the ratio of the total surface area of the two or more elongated flat areas to the total area of the first and second surface are: between 1% and 20%, or between 2% and 30% or between 2% and 20% or between 2% and 10%. For the avoidance of doubt: the ends of the ranges are included in the range.

In further preferred embodiment the largest depth of the recess (or indentation or concavity or depression) outside of the two or more elongated flats on the first surface or the second surface of the electrodes is limited to less than 0.5 mm or 500 µm. Also preferred is if this largest depth of recess is less than 450 µm or less than 350 µm. In any case it is not beneficial to the invention if the largest depth of the recess is less than 50 µm as this makes the whole first and second surface close to flat leading again to the problems of the prior art. The advantage of this recess depth is that the contact between the steel cord and the electrode is guaranteed to take place as much as possible in the areas close the two or more elongated flat areas.

One way to ensure such a recess is to give the surface of the first surface or the second surface or both a concave curvature in between the elongated flat areas. With 'concave' is meant that for any two points on the surface outside of the elongated flat areas the line connecting them does not go through the electrode. By preference the curvature given is cylindrical. Alternatively it can be spherical. The radius of curvature of the concave curvature is preferable smaller than 30 mm for example smaller than 25 mm but in any case larger than 5 mm or larger than 10 mm. A larger radius of curvature leads to a larger contact area that is still concentrated around the two or more elongated flats when the welding clamp is closed and the first and second surface come near to one another.

In a further preferred embodiment the first surface or the second surface or both the first and second surface can be provided with one or more grooves that are oriented in the cord direction. The grooves can have any one of the following shapes when considered in a cross section according a plane perpendicular to the steel cord direction: V, U shape, semi-circle, semi-oval or semi-ellipse. As the groove is along the steel cord direction it will cut the elongated flat areas in two as they are oriented perpendicularly to the cord direction. The grooves help to align the steel cord ends in the clamps of the welding apparatus.

In a further preferred embodiment the electrodes are replaceable in the clamps. Indeed the electrodes will wear out by use and must be replaced regularly. The electrodes are fixed to the clamps by means of screws or a dovetail connection or any other suitable fixing means. Important is that the connection ensures a good thermal and electrical contact.

According to a second aspect of the invention, a method of welding steel cord ends to one another is defined in claim 10.

According to a preferred embodiment of the welding apparatus, the grooves may have a cross section in the plane perpendicular to the cord direction in the shape of one out of the group comprising a V, U, semi-circle, semi-oval or semi ellipse.

The material of which the electrodes are made requires that the material must conduct electricity and heat very well. This usually leads to electrodes that are made of pure copper or a copper alloy. However, the electrodes must also be wear and heat resistant as they are used under harsh conditions. According to a further preferred embodiment of the welding apparatus, preferred alloys to this end are copper alloys consisting of more than 50 % by weight of copper and one or more other metals such as zinc, nickel, beryllium, tin, cobalt, zirconium, chromium or silicon.

### Brief Description of Figures in the Drawings

FIGURE 1 shows a welding apparatus with two clamps, each carrying a pair of electrodes;
FIGURE 2a shows a pair of electrodes as they are known in the art of steel cord welding;
FIGURE 2b shows the contacting areas between the first and second electrode of the pair of electrodes of FIGURE 2a;
FIGURE 3a shows a pair of electrodes according a first embodiment of the invention;
FIGURE 3b shows the contacting areas between the first and second electrode of the pair of electrodes of FIGURE 3a;
FIGURE 4a shows a pair of electrodes according a second embodiment of the invention;
FIGURE 4b shows the contacting areas between the first and second electrode of the pair of electrodes of FIGURE 4a;
FIGURE 5 illustrates the problem associated with the prior art electrodes;
FIGURE 6 illustrates the solution provided by the electrodes and welding apparatus according the invention.

In the reference numbers of the figures the hundred number consistently refers to the number of the figure. Across figures the lower two digits (tens and units) refer to identical features.

The figures are not drawn to scale.

### Mode(s) for Carrying Out the Invention

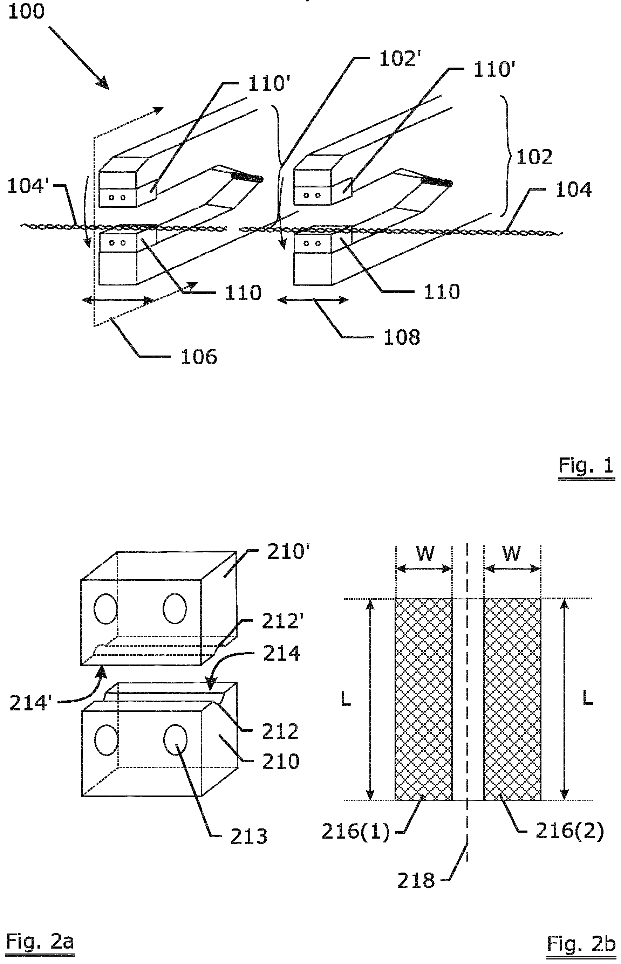

In FIGURE 1 a welding apparatus 100 is shown having two clamps 102, 102'. The clamps close in a plane indicated 106. The plane defines the direction in which the steel cord ends 104, 104' are oriented to the clamps prior and during welding. Each one of the clamps 102, 102' carries a pair of electrodes 110, 110' with surfaces that face one another. The clamps 102, 102' are moveable to one another along an axis parallel to the orientation of the steel cords 104, 104' as indicated by arrow 108.

A pair of prior art electrodes 110, 110' is detailed in FIGURE 2a as 210, 210'. Basically they consist of two blocks of copper alloy, for example made of AMPCOLOY^{®}89 available from AMPCO Metal. The copper alloy consists of Cu with small additions of cobalt, beryllium and nickel. The electrodes 210, 210' are provided with mounting holes 213 for receiving screws that hold the electrode to the clamps. The first electrode 210 has a first surface 214, the second electrode 210' has a second surface 214' that faces the first surface 214. In both surfaces 214, 214' a semi-circular groove 212, 212' is provided along the cord direction for receiving the steel cord ends. The diameter of the semi-circular grooves matches the diameter of the steel cords or is slightly larger. The grooves serve to align the steel cords prior to welding.

When now pressing the first and second surfaces of the electrodes against one another with pressure sensitive paper in between an imprint as depicted in FIGURE 2b results. Two elongated areas 216(1) and 216(2) become visible at either side of the central groove that defines the cord direction 218. Both elongated areas show a width 'W' and a length 'L' as indicated in the figure. However, the length direction is parallel to the cord direction in this case.

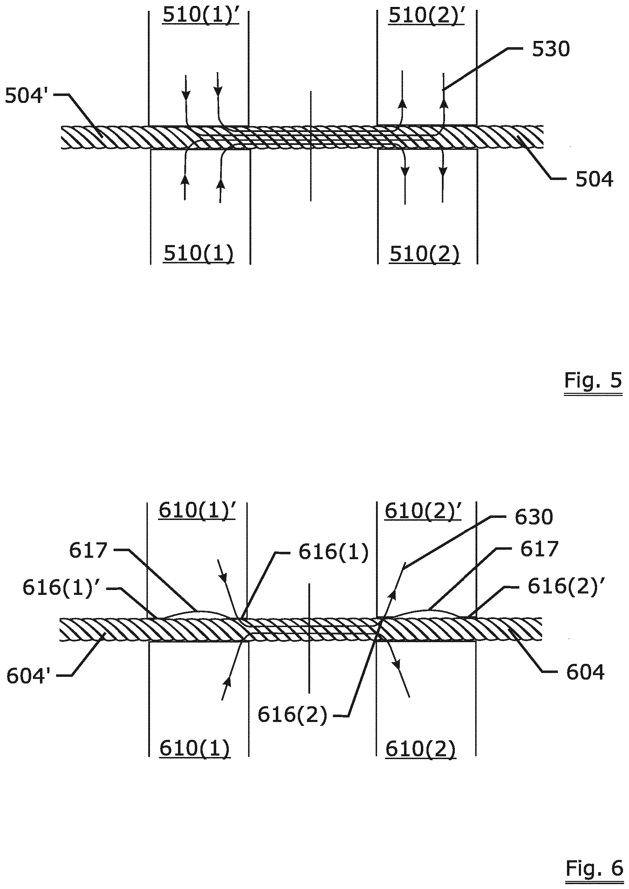

The problem that occurs with this kind of prior art electrodes is schematically illustrated in FIGURE 5. When the welding clamps are closed the first and second surface of the electrode pairs 510(1), 510(1)' and 510(2), 510(2)' clamp the steel cord ends 504 and 504' over a substantial length of the electrode. As a steel cord contains 2 to 30 fine filaments that can glide over one another the contacts with the first and second surface of the electrodes can occur at different places. As a result the current - indicated with the arrowed lines 530 - may run at different places through the weld. This results in a greatly varying contact resistance from weld to weld. Some welds are properly formed and pass the requirements of breaking load, weld diameter and ductility while other welds fail.

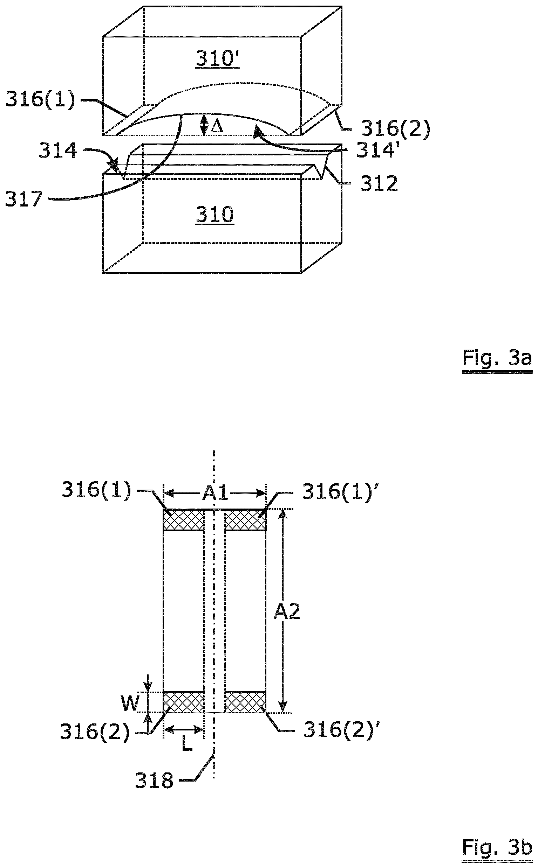

In order to overcome the problem of variable contact resistance the inventor suggested the use of electrodes as depicted in FIGURE 3a. A pair of electrodes 310, 310' is shown. The surface 314 of the first electrode 310 is conventional and is flat with - in this case - a V-shaped groove 312 in the middle resulting in two flats that are rectangular. The surface 314' of the second electrode 310' is different from that of the first surface in that two rectangular - thus elongated - flats 316(1) and 316(2) are provided at the ends of the electrode. The two flats 316(1), 316(2) are separated from one another with a concave, cylindrically formed recess 317. The largest depth of the recess relative to the plane of the two flats is indicated with 'Δ'.

The two flats of the first electrode surface are perpendicularly oriented to the two flats of the second electrode.

In a realistic case the width of the flats 316(1), 316(2) is 0.3 mm, the length of the flats is 11 mm. Total area of the second electrode is rectangular in shape with a first length A1 of 11 mm and a second length A2 of 8 mm. The radius of the cylindrically formed recess 317 is 25 mm resulting in a largest recess depth 'Δ' of 0.3 mm or 300 µm. The first surface matches the rectangular shape of the second surface i.e. is rectangle with sides 11×8 mm. The V-groove 312 has a width of 0.75 mm.

When now the first surface is pressed against the second electrode, without any steel cord being present, the first and second surface contact one another in the manner as depicted in FIGURE 3b. The contact area is limited to four elongated areas, two formed by the first flat 316(1), 316(1)' and two formed by the second flat 316(2), 316(2)'. The elongated areas have a width 'W' and a length 'L'. The length direction is perpendicularly oriented to the cord direction.

The working of the improved electrode is illustrated in FIGURE 6. Due to the presence of the flats 616(1), 616(1)' on the second surface of the first clamp and the flats 616(2) and 616(2)' on the second surface of the second clamp, the steel cord ends 604, 604' are locally squeezed between the electrode surfaces. Hence, during welding the first and second surface of the first and second clamp should not touch one another as otherwise the steel cord end is not sufficiently held. As a result the electrical current 630 will flow preferentially at the flats 616(1) and 616(2). If further electrical contact is made outside of the flat areas this will still be localised in the vicinity of the flats due to curved area 617.

When now considering the figures the two flats on the second electrode have an area of 2×0.3×11 mm². The area of the second electrode surface is 11×8 mm². The total area of the two elongated flat areas is therefore 7.5 % of the area of the second electrode surface. When now calculating the area of the four elongated flat areas of FIGURE 3b one obtains a ratio of 4×0.3×(11-0.75)/2 mm² over 2×11×8 mm² or 3.49%.

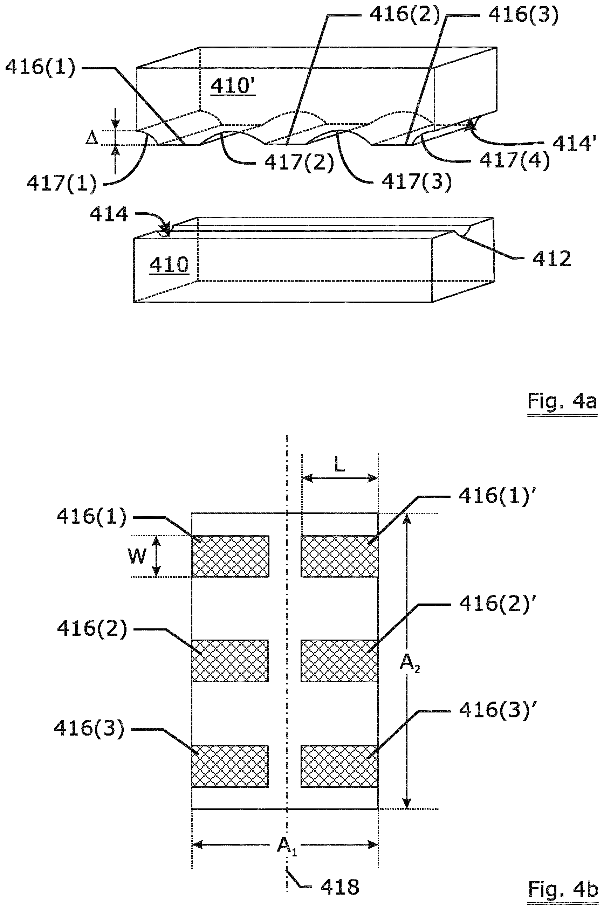

FIGURE 4a shows a second embodiment of the invention. Again the first electrode 410 has a first surface 414 that is conventional in that it is flat with one longitudinal groove 412 that has a semi-elliptical cross section. The major axis of the ellipse is parallel to the flat of the first surface 414. The second electrode 410' has a series flats 416(1), 416(2), 416(3) in a single plane with adjacent recessed areas 417(1), 417(2), 417(3) and 417(4). The slope downward from the flats towards the recesses is sufficiently large in order not to make the changeover abrupt.

Figure 4b shows the contact areas when the first surface is contacted with the second surface. Six separate flat contact areas form, two for each flat on the second surface, 416(1), 416(1)', 416(2), 416(2)', 416(3), 416(3)'. Each of the flat areas shows a width 'W' and a length 'L'. The length direction is oriented perpendicular to the cord direction 418.

When using a pair of electrodes as presented the success rate for making steel cord welds increases. The welding apparatus according the invention is particularly useful for welding steel cord types that are not tightly twisted together. Examples of such steel cord types are known to the skilled person as open cords, oval cords, flat cords, cords of the N+M type wherein N is a first group of filaments and M is a second group of filaments wherein one of the first and second group of filaments has been twisted while the second group is free of twisting.

## Claims

1. A welding apparatus (100) for butt welding steel cord ends (104, 104'), said welding apparatus comprising two or more clamps (102, 102'), each of said clamps having a clamp plane wherein the clamp opens or closes, all of said clamp planes being parallel to one another, said two or more clamps defining a cord direction (318, 418) perpendicular to the plane of said clamps (106), each one of the clamps carrying a pair of electrodes (110, 110';310, 310'; 410, 410'), the first member of said pair of electrodes (310, 410) having a first surface, the second member of said pair of electrodes (310', 410') having a second surface; said first surface facing said second surface,
**characterized in that**
when said first surface and said second surface are pressed against one another without steel cord ends in between, said first surface and said second surface are so constructed that they contact one another in two or more elongated flat areas (316(1), 316(1)';316(2), 316(2)'; 416(1), 416(1)';416(2), 416(2)', 416(3), 416(3)'), said two or more elongated flat areas having a width direction and length direction, said length direction being perpendicular to said width direction, said elongated flat areas being oriented with the length direction perpendicular to said cord direction.

2. The welding apparatus according to claim 1 wherein the number of said two or more elongated flat areas is two, three, four, five or six.

3. The welding apparatus according to any one of claims 1 or 2 where the total area of said two or more elongated flat areas is larger than or equal to 1% and smaller than or equal to 30% of the total area of said first surface and said second surface.

4. The welding apparatus according to any one of the claims 1 to 3 wherein said first surface or said second surface or both said first and second surface are provided with one or more recesses (317, 417(1), 417(2), 417(3)), the largest depth of the recess outside the two or more elongated flat areas of said first or said second surface (Δ) is less than 500 µm

5. The welding apparatus according to any one of claims 1 to 4 wherein said first surface or said second surface or both said first and second surface is concavely curved (317, 417(1), 417(2), 417(3)).

6. The welding apparatus according to any one of claims 1 to 5 wherein said first surface or said second surface or both said first and said second surface is provided with one or more grooves (312, 412) in said cord direction (318, 418).

7. The welding apparatus according to any one of claims 1 to 6 wherein the members of said pair of electrodes (110, 110') are replaceable in said clamps (102, 102').

8. The welding apparatus according to claim 6 wherein said one or more grooves (312, 412) have a cross section in the shape of one out of the group comprising V, U, semi-circle, semi-oval, or semi ellipse.

9. The welding apparatus according to any one of claims 1 to 6 wherein said electrodes are made from copper or an alloy of copper with one or more out of the group comprising nickel, cobalt, zinc, tin, beryllium, chromium, zirconium or silicon.

10. A method of welding steel cord ends to one another, said method being characterised through the following steps:
- providing an apparatus according to any one of claims 1 to 9;
- providing a first and second steel cord end cut flush;
- clamping the first steel cord end in between the first and second surface of the electrode pair of a first clamp in the cord direction;
- clamping the second steel cord end in between the first and second surface of the electrode pair of a second clamp in the cord direction, wherein the first and second steel cord ends are aligned end to end;
- pressing the steel cord ends against each other by moving the two or more clamps relative to one another on a common axis perpendicular to the plane of the clamps, so as to make electrical
contact and to consolidate the steel material; wherein in the first and second clamp when the first surface is pressed against the second surface without the steel cord end in between, the first and second surface contact one another in two or more elongated flat areas of which the length direction is perpendicular to the cord direction.

## Patentansprüche

1. Schweißvorrichtung (100) zum Stumpfschweißen von Stahlcordenden (104, 104'), wobei die Schweißvorrichtung zwei oder mehr Klemmen (102, 102') umfasst, wobei jede der Klemmen eine Klemmebene aufweist, in der sich die Klemme öffnet oder schließt, alle Klemmebenen zueinander parallel sind und die zwei oder mehr Klemmen eine Cordrichtung (318, 418) senkrecht zur Ebene der Klemmen (106) definieren, wobei jede der Klemmen ein Paar Elektroden (110, 110'; 310, 310'; 410, 410') trägt, das erste Element des Elektrodenpaares (310, 410) eine erste Fläche aufweist, das zweite Element des Elektrodenpaares (310', 410') eine zweite Fläche aufweist und die erste Fläche der zweiten Fläche zugewandt ist,
**dadurch gekennzeichnet, dass**
dann, wenn die erste Fläche und die zweite Fläche ohne Stahlcordenden dazwischen gegeneinander gedrückt werden, die erste Fläche und die zweite Fläche derart konstruiert sind, dass sie sich in zwei oder mehr gestreckten, ebenen Bereichen (316(1), 316(1)'; 316(2), 316(2)'; 416(1), 416 (1) '; 416(2), 416(2)', 416(3), 416(3)') miteinander in Kontakt befinden, wobei die zwei oder mehr gestreckten, ebenen Bereiche eine Breitenrichtung und eine Längenrichtung aufweisen, die Längenrichtung zur Breitenrichtung senkrecht ist und die gestreckten, ebenen Bereiche derart orientiert sind, dass die Längenrichtung zur Cordrichtung senkrecht ist.

2. Schweißvorrichtung nach Anspruch 1, wobei die Anzahl der zwei oder mehr gestreckten, ebenen Bereiche zwei, drei, vier, fünf oder sechs ist.

3. Schweißvorrichtung nach einem der Ansprüche 1 oder 2, wobei der Gesamtflächeninhalt der zwei oder mehr gestreckten, ebenen Bereiche größer oder gleich 1 % und kleiner oder gleich 30 % des Gesamtflächeninhalts der ersten Fläche und der zweiten Fläche ist.

4. Schweißvorrichtung nach einem der Ansprüche 1 bis 3, wobei die erste Fläche oder die zweite Fläche oder sowohl die erste als auch die zweite Fläche mit einer oder mehreren Vertiefungen (317, 417(1), 417(2), 417(3)) versehen sind, wobei die größte Tiefe (Δ) der Vertiefung außerhalb der zwei oder mehr gestreckten, ebenen Bereiche der ersten oder der zweiten Fläche kleiner als 500 µm ist.

5. Schweißvorrichtung nach einem der Ansprüche 1 bis 4, wobei die erste Fläche oder die zweite Fläche oder sowohl die erste als auch die zweite Fläche konkav gekrümmt (317, 417(1), 417(2), 417(3)) sind.

6. Schweißvorrichtung nach einem der Ansprüche 1 bis 5, wobei die erste Fläche oder die zweite Fläche oder sowohl die erste als auch die zweite Fläche mit einer oder mehreren Rillen (312, 412) in der Cordrichtung (318, 418) versehen sind.

7. Schweißvorrichtung nach einem der Ansprüche 1 bis 6, wobei die Elemente des Elektrodenpaares (110, 110') in den Klemmen (102, 102') austauschbar sind.

8. Schweißvorrichtung nach Anspruch 6, wobei die eine oder die mehreren Rillen (312, 412) einen Querschnitt in der Form eines Elements aus der Gruppe, die V, U, Halbkreis, Halboval oder Halbellipse umfasst, aufweisen.

9. Schweißvorrichtung nach einem der Ansprüche 1 bis 6, wobei die Elektroden aus Kupfer oder einer Kupferlegierung mit einem oder mehreren Elementen aus der Gruppe, die Nickel, Kobalt, Zink, Zinn, Beryllium, Chrom, Zirkon oder Silizium umfasst, hergestellt sind.

10. Verfahren zum Aneinanderschweißen von Stahlcordenden, wobei das Verfahren durch die folgenden Schritte gekennzeichnet ist:
- Bereitstellen einer Vorrichtung nach einem der Ansprüche 1 bis 9;
- Bereitstellen eines ersten und eines zweiten Stahlcordendes, die bündig geschnitten sind;
- Klemmen des ersten Stahlcordendes zwischen die erste und die zweite Fläche des Elektrodenpaares einer ersten Klemme in der Cordrichtung;
- Klemmen des zweiten Stahlcordendes zwischen die erste und die zweite Fläche des Elektrodenpaares einer zweiten Klemme in der Cordrichtung,
wobei das erste und das zweite Stahlcordende an ihren Enden aufeinander ausgerichtet sind;
- Drücken der Stahlcordenden gegeneinander durch Bewegen der zwei oder mehr Klemmen relativ zueinander auf einer gemeinsamen Achse, die zur Ebene der Klemmen senkrecht ist, derart, dass ein elektrischer Kontakt bewirkt wird und das Stahlmaterial verfestigt wird; wobei
bei der ersten und der zweiten Klemme dann, wenn die erste Fläche ohne das Stahlcordende dazwischen gegen die zweite Fläche gedrückt wird, die erste und die zweite Fläche sich in zwei oder mehr gestreckten, ebenen Bereichen, deren Längsrichtung zur Cordrichtung senkrecht ist, miteinander in Kontakt befinden.

## Revendications

1. Appareil (100) de soudage destiné au soudage en bout d'extrémités (104, 104') de cordons en acier, ledit appareil de soudage comportant au moins deux pinces (102, 102'), chacune desdites pinces présentant un plan de pince dans lequel la pince s'ouvre ou se ferme, lesdits plans de pinces étant tous parallèles le uns aux autres, lesdites au moins deux pinces définissant une direction (318, 418) de cordons perpendiculaire au plan desdites pinces (106), chacune des pinces portant une paire d'électrodes (110, 110' ; 310, 310' ; 410, 410'), le premier membre de ladite paire d'électrodes (310, 410) présentant une première surface, le second membre de ladite paire d'électrodes (310', 410') présentant une seconde surface ;
ladite première surface faisant face à ladite seconde surface,
**caractérisé en ce que**
lorsque ladite première surface et ladite seconde surface sont pressées l'une contre l'autre sans extrémités de cordons en acier entre elles, ladite première surface et ladite seconde surface sont construites de telle sorte qu'elles entrent en contact mutuel dans au moins deux zones plates allongées (316(1), 316(1)' ; 316(2), 316(2)' ; 416(1), 416(1)' ; 416(2), 416(2)', 416(3), 416(3)'), lesdites au moins deux zones plates allongées présentant une direction de largeur et une direction de longueur, ladite direction de longueur étant perpendiculaire à ladite direction de largeur, lesdites zones plates allongées étant orientées avec la direction de longueur perpendiculaire à ladite direction de cordons.

2. Appareil de soudage selon la revendication 1, le nombre desdites au moins deux zones plates allongées étant de deux, trois, quatre, cinq ou six.

3. Appareil de soudage selon l'une quelconque des revendications 1 ou 2, l'aire totale desdites au moins deux zones plates allongées étant supérieure ou égale à 1% et inférieure ou égale à 30% de l'aire totale de ladite première surface et de ladite seconde surface.

4. Appareil de soudage selon l'une quelconque des revendications 1 à 3, ladite première surface ou ladite seconde surface, ou à la fois ladite première et ladite seconde surface, étant munies d'un ou de plusieurs évidements (317, 417(1), 417(2), 417(3)), la plus grande profondeur de l'évidement en dehors desdites au moins deux zones plates allongées de ladite première ou de ladite seconde surface (Δ) étant de moins de 500 µm.

5. Appareil de soudage selon l'une quelconque des revendications 1 à 4, ladite première surface ou ladite seconde surface, ou à la fois ladite première et ladite seconde surface, étant incurvées de façon concave (317, 417 (1) , 417 (2) , 417 (3) ) .

6. Appareil de soudage selon l'une quelconque des revendications 1 à 5, ladite première surface ou ladite seconde surface, ou à la fois ladite première et ladite seconde surface, étant munies d'une ou de plusieurs rainures (312, 412) dans ladite direction (318, 418) de cordons.

7. Appareil de soudage selon l'une quelconque des revendications 1 à 6, les membres de ladite paire d'électrodes (110, 110') pouvant être remplacés dans lesdites pinces (102, 102').

8. Appareil de soudage selon la revendication 6, ladite ou lesdites rainures (312, 412) présentant une section droite dont la forme figure dans le groupe comprenant un V, un U, un demi-cercle, un demi-ovale ou une demiellipse.

9. Appareil de soudage selon l'une quelconque des revendications 1 à 6, lesdites électrodes étant constituées de cuivre ou d'un alliage de cuivre avec un ou plusieurs éléments du groupe comprenant le nickel, le cobalt, le zinc, l'étain, le béryllium, le chrome, le zirconium ou le silicium.

10. Procédé de soudage d'extrémités de cordons en acier l'une à l'autre, ledit procédé étant **caractérisé par** les étapes suivantes :
- mettre en place un appareil selon l'une quelconque des revendications 1 à 9 ;
- mettre en place une première et une seconde extrémité de cordon en acier coupées à ras ;
- serrer la première extrémité de cordon en acier entre la première et la seconde surface de la paire d'électrodes d'une première pince dans la direction de cordons ;
- serrer la seconde extrémité de cordon en acier entre la première et la seconde surface de la paire d'électrodes d'une seconde pince dans la direction de cordons, les première et seconde extrémités de cordons en acier étant alignées bout à bout ;
- presser les extrémités de cordons en acier l'une contre l'autre en déplaçant lesdites au moins deux pinces l'une par rapport à l'autre sur un axe commun perpendiculaire au plan des pinces, de façon à établir un contact électrique et à tasser le matériau en acier ;
dans la première et la seconde pince, lorsque la première surface est pressée contre la seconde surface sans l'extrémité de cordon en acier entre elles, la première et la seconde surface entrant en contact mutuel dans au moins deux zones plates allongées dont la direction de longueur est perpendiculaire à la direction de cordons.
